# EUROPÄISCHE PATENTSCHRIFT

(11) **EP 0 624 835 B1**
(45) Veröffentlichungstag und Bekanntmachung des Hinweises auf die Patenterteilung: **04.12.1996**
(21) Anmeldenummer: 94107268.8
(22) Anmeldetag: 10.05.1994
(51) Int. Cl.: G05D 16/20, F23N 5/10, F16K 31/40

(54) **Servodruckregler mit Einschalt-Magnetantrieb**
Servo pressure regulator with magnetic switch-on drive
Servo-régulateur de pression avec enclenchement à entraînement magnétique

(30) Priorität: 13.05.1993 DE 4316034
(43) Veröffentlichungstag der Anmeldung: 17.11.1994
(73) Patentinhaber: HONEYWELL B.V., NL-1101 EA Amsterdam Z.O. (NL)
(72) Erfinder: Munsterhuis, Wim, NL-7751 GP Dalen (NL)
(74) Vertreter: Rentzsch, Heinz, Dipl.-Ing.

(56) Entgegenhaltungen:
- EP-A- 0 109 978
- WO-A-85/02695
- DE-A- 1 600 752
- DE-A- 2 537 851
- US-A- 3 071 147

## Beschreibung

Die Erfindung betrifft einen Servodruckregler gemäß Gattungsbegriff des Anspruchs 1. Bei einer aus DE-C 33 45 561 bekannten Gasdruckregler-Sicherheitsmagnetventil-Kombination dieser Art ist die Ventilstange zwischen Steuermembran und Hauptschließkörper mit einer Axialbohrung versehen, welche die mit einer Drosselstelle versehene Verbindungsleitung zwischen Ventileinlaßseite und Steuerdruckkammer bildet. Da diese Axialbohrung auch den Hauptschließkörper durchsetzt, ist dieser mit der Ventilstange starr verbunden. Dies ist im Hinblick auf etwaige Fertigungstoleranzen ungünstig. Der Aufbau der bekannten Regler-Sicherheitsventilkombination ist aufwendig und erfordert enge Fertigungstoleranzen. Des weiteren zeigt die DE-C 25 37 851 einen Gasdruckregler, bei dem der Anker eines Magnetantriebs einerseits bei stromlosem Magneten zum Sperren des Hauptschließkörpers in der Schließlage und andererseits bei Stromfluß zur Freigabe einer Verbindungsleitung zwischen Ventilauslaßseite und Steuerdruckkammer dient und wobei die Ventilstange hierzu eine dem Anker zugewandte axiale Sackbohrung und zwei sich gegenüberstehende Radialbohrungen aufweist.

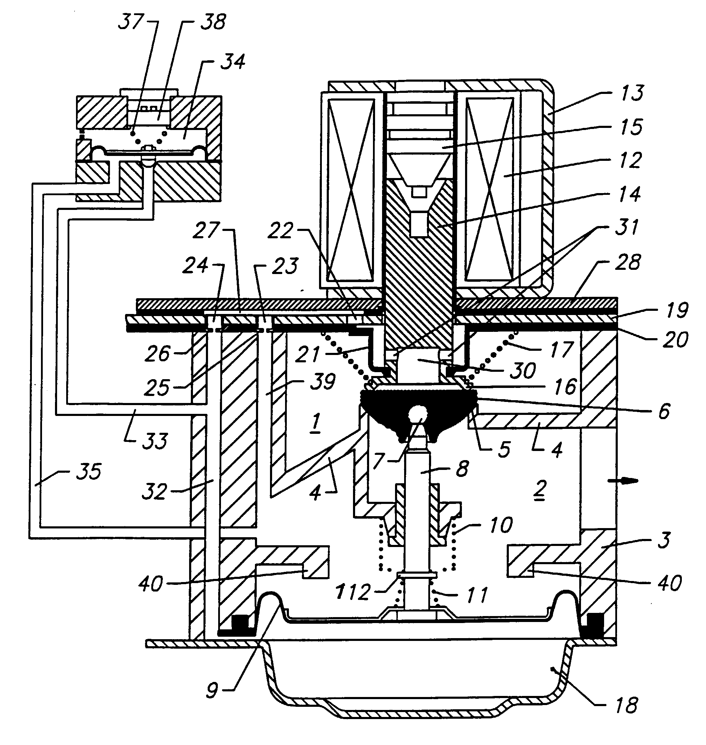

Ausgehend vom eingangs genannten Stand der Technik soll mit der Erfindung der Aufbau des Servodruckreglers vereinfacht, seine Montage erleichtert und das Erfordernis enger Fertigungstoleranzen verringert werden. Diese Aufgabe wird gelöst durch die im Anspruch 1 gekennzeichnete Erfindung. Sie benötigt keine axial durchbohrte Ventilstange mit starr daran befestigtem Ventilkörper. Während im Stand der Technik bei Handeinstellung der Federbelastung des Abblasventils eine in den Anker eingesetzte Kolbenstange durch die Axialbohrung hindurch auf die Membran des Abblasventils einwirkt, benötigt die Erfindung weder eine solche Axialbohrung noch eine Kolbenstange. Die Einstellung des Servodruckreglers ist wesentlich vereinfacht. Vorteilhafte Ausgestaltungen der Erfindung ergeben sich aus den Unteransprüchen. Sie wird nachfolgend anhand eines in der Zeichnung wiedergegebenen Ausführungsbeispiels erläutert.

Zwischen Einlaßkammer 1 und Auslaßkammer 2 des Ventilgehäuses 3 befindet sich eine Trennwand 4 mit einem Ventilsitz 5, der durch den Hauptschließkörper 6 verschließbar ist. Dieser sitzt mit einer Gelenkverbindung 7 auf der Ventilstange 8, deren unteres Ende mit der Steuermembran 9 verbunden ist. Eine Schließfeder 10 hält Ventilstange 8 und Schließkörper 6 in Schließlage. Die Membran 9 stützt sich über eine Feder 11 an einem Kragen 112 der Ventilstange 8 ab.

Auf das Ventilgehäuse 3 aufgesetzt ist ein Magnetantrieb bestehend aus einer Spule 12, einem Joch 13, einem Anker 14 und einem Ankeranschlag 15. Eine an einem Ansatz oder Aufsatz 16 des Ankers 14 angreifende Feder 17 drückt den Anker bei stromloser Spule 12 gegen den Schließkörper 6, so daß dieser in Schließlage gehalten wird.

Soll das Hauptventil 5, 6 geöffnet werden, so muß einerseits der Anker 14 vom Schließkörper 6 abgehoben werden und andererseits der Druck in der Steuerkammer 18 die Schließkraft der Feder 10 überwinden, um den Schließkörper 6 vom Ventilsitz 5 abzuheben.

Die Einlaßkammer 1 des Ventilgehäuses 3 ist auf der der Steuerdruckkammer 18 abgewandten Seite durch eine Platte 19 abgedeckt und durch eine dazwischen liegende Dichtmembran 20 abgedichtet. Der Anker 14 ist gegenüber der Einlaßkammer 1 durch eine am Anker 14 anliegende Membran 21 abgedichtet, welche entweder eine gesonderte Membran oder Teil der Membranplatte 20 ist. In der Platte 19 und der Membranplatte 20 befinden sich Durchbrechungen 22, 23 und 24, wobei in die Durchbrechungen 23 und 24 je eine Drosselstelle 25 bzw. 26 eingesetzt ist. Die Durchbrechungen 22, 23 und 24 stehen über eine Verbindungsleitung 27 in Verbindung, welche entweder in die Platte 19 oder in eine äußere Abschlußplatte 28 eingearbeitet ist oder sich zwischen diesen beiden erstreckt.

Der Ansatz 16 des Ankers 14 bildet zugleich mit dem Hauptschließkörper 6 ein zweites Ventil. Es verschließt den Einlaß zur Verbindungsleitung 27, der durch die Sackbohrung 30 und die beiden Radialbohrungen 31 in der dem Schließkörper 6 zugewandten Stirnseite des Ankers 14 gebildet wird. Die Verbindungsleitung 27 steht über die Düse 26 und den Steuerdruckkanal 32 einerseits mit der Steuerdruckkammer 18 und andererseits über die Leitung 33 mit einem Abblasventil 34 in Verbindung, dessen zweiter Anschluß 35 in die Auslaßkammer 2 mündet. Das Abblasventil 34 ist im gezeigten Ausführungsbeispiel ein Membranventil, dessen Schließfeder 37 durch eine Einstellschraube 38 von Hand einstellbar ist. Statt dessen kann das Abblasventil auch durch einen Elektromagneten gesteuert werden, wie dies aus EP-B 0 039 000 bekannt ist.

Die Verbindungsleitung 27 steht ferner über die Drosselstelle 25 und einen gehäusefesten Verbindungskanal 39 mit der Auslaßkammer 2 in Verbindung. Der Verbindungskanal 39 ist also der Reihenschaltung von Abblasventil 34 und Drosselstelle 26 parallelgeschaltet.

In der gezeigten Ruhestellung des Servodruckreglers drückt die Feder 17 den Anker 14 gegen den Schließkörper 6, so daß dieser einerseits durch die Kraft der Feder 17 und zusätzlich durch die Kraft der Schließfeder 10 in Schließlage gehalten wird. Damit ist zugleich der Einlaß 30 für die Verbindungsleitung 27 geschlossen. Zum Öffnen des Hauptventils 5, 6 wird zunächst Strom durch die Erregerspule 12 des Magnetantriebs 12 bis 14 geschickt, wodurch der Anker 14 vom Schließkörper 6 abhebt und diesen freigibt. Unter der Kraft der Feder 10 bleibt das Hauptventil 5, 6 zunächst noch geschlossen. Durch Abheben des Ansatzes 16 vom Schließkörper 6 wird der Einlaß 30 zur Verbindungsleitung 31, 27 freigegeben. Damit strömt Gas vom Einlaß 1 durch die Ankerbohrungen 30 und 31 sowie die Verbindungsleitung 27 und die Drosselstelle 26 zum Abblasventil 34. Je nach Einstellung des Abblasventils wird der sich in der Leitung 31 aufbauende Druck mehr oder weniger über die Leitung 35 zur Auslaßkammer 2 hin abgebaut. Der Druck in der Leitung 33 dient zugleich in bekannter Weise als Steuerdruck für den Antrieb des Schließkörpers 6. Zu diesem Zweck gelangt dieser Steuerdruck durch den Kanal 32 in die Steuerdruckkammer 18 und hebt über die Membran 9 den Schließkörper 6 gegen die Kraft seiner Schließfeder 10 vom Ventilsitz ab. Für den Öffnungsvorgang des Ventils ist der parallele Verbindungskanal 39 mit der Drosselstelle 25 zunächst von untergeordneter Bedeutung. Die Regelung des Gasdurchsatzes durch das Hauptventil 5, 6 erfolgt in herkömmlicher Weise über den Steuerdruck in der Steuerkammer 18.

Zum Schließen des Ventils wird der Strom durch die Spule 12 abgeschaltet. Damit drückt die Feder 17 den Anker 14 und mit ihm dessen Ansatz 16 nach unten und somit den Schließkörper 6 gegen den Ventilsitz 5. Zu dieser Zeit herrscht in der Steuerdruckkammer 18 noch ein von der vorangehenden Einstellung des Ventils abhängiger Steuerdruck. Um zu vermeiden, daß dieser das Schließen des Hauptventils verzögert, ist die Steuermembran 9 nicht starr mit der Ventilstange verbunden, sondern über die Feder 11 und den Kragen 112. Wenn also der Schließkörper 6 gegen den Sitz 5 gedrückt wird und gleichwohl noch ein merklicher Steuerdruck in der Kammer 18 herrscht, so wird hierdurch die Feder 11 zusammengedrückt, so daß gleichwohl der Schließkörper schnell, beispielsweise in der geforderten Schließzeit von 1 Sekunde schließt. In diesem Zustand ist die Feder 11 gespannt, und ihre Federkraft drückt nach dem Schließen des Hauptventils 5, 6 die Membran 9 nach unten. Der Steuerdruck in der Kammer 18 entweicht über die Leitung 32, die Drosselstellen 26 und 25 und den Kanal 39 zur Auslaßkammer 2 hin. Damit werden auch die Steuerdruckkammer 18 und das Abblasventil 34 drucklos.

Sollte die Membran 21 undicht werden, so darf das Hauptventil 5, 6 nicht öffnen. In diesem Falle gelangt zwar der Eingangsdruck von der Einlaßkammer 1 über die Verbindungsleitung 27 und die Drosselstelle 26, wenn auch gedrosselt, in die Antriebskammer 18 und hebt folglich die Membran 9 an. Dabei wird, da der Schließkörper 6 durch die Feder 17 noch in Schließlage gehalten wird, die zwischen der Membran 9 und dem Kragen 112 eingespannte Feder 11 zusammengedrückt. Bevor sie ihre voll zusammengedrückte Blocklänge erreicht, legt sich die Membran 9 gegen die Anschläge 40, womit die Krafteinwirkung auf die Ventilstange 8 begrenzt und sichergestellt wird, daß das Hauptventil 5, 6 so lange nicht öffnet, wie der Magnetantrieb 12 - 15 stromlos ist.

## Patentansprüche

1. Servodruckregler mit
a) einem in Schließrichtung federbelasteten (10) Hauptventilschließkörper (6), der den Durchlaß zwischen einer Einlaßkammer (1) und einer Auslaßkammer (2) beherrscht;
b) einem über eine Ventilstange (8) auf den Hauptventilschließkörper einwirkenden Membranantrieb (9, 18) mit einer Steuerdruckkammer (18), wobei der Steuerdruck auf den Hauptventilschließkörper in Öffnungsrichtung wirkt;
c) einem Magnetantrieb (12 - 15), dessen unter Federspannung (17) stehender Anker (14) bei stromlosem Magneten (12) am Hauptventilschließkörper (6) anliegt und diesen in Schließlage hält;
d) einer durch den Anker (14) verschließbaren und eine erste Drosselstelle (26) aufweisenden Verbindungsleitung (27) zwischen der Einlaßkammer (1) und der Steuerdruckkammer (18) des Membranantriebs (9, 18);
**dadurch gekennzeichnet,** daß
e) die Verbindungsleitung (27) gehäusefest angeordnet ist und
f) sie zwischen Einlaßkammer (1) und erster Drosselstelle (26) über einen eine zweite Drosselstelle (25) aufweisenden gehäusefesten Verbindungskanal (39) mit der Auslaßkammer (2) in Verbindung steht.

2. Druckregler nach Anspruch 1, **gekennzeichnet durch:**
a) ein zwischen der Auslaßkammer (2) und der Steuerdruckkammer (18) eingeschaltetes, durch eine federbelastete Membran gesteuertes Abblasventil (34); sowie
b) Mittel (37, 38) zur Einstellung der Federbelastung des Abblasventils (34).

3. Druckregler nach Anspruch 2, **dadurch gekennzeichnet,** daß der Verbindungskanal (39) der Reihenschaltung von Abblasventil (34) und erster Drosselstelle (26) parallelgeschaltet ist.

4. Druckregler nach Anspruch 1, 2 oder 3, **dadurch gekennzeichnet,** daß der ankerseitige Einlaß (30) der Verbindungsleitung (27) durch wenigstens eine Ankerbohrung (30, 31) gebildet ist.

5. Druckregler nach Anspruch 4, **dadurch gekennzeichnet,** daß der Anker eine stirnseitige Sackbohrung (30) sowie mindestens eine in diese einmündende Radialbohrung (31) aufweist.

6. Druckregler nach einem der Ansprüche 1 bis 5, **dadurch gekennzeichnet,** daß sich die Steuermembran (9) über eine Übertragungsfeder (11) an der Ventilstange (8) abstützt.

7. Druckregler nach Anspruch 6, **dadurch gekennzeichnet,** daß der Hub der Steuermembran (9) in Öffnungsrichtung des Hauptventils (5, 6) durch wenigstens einen Anschlag (40) auf einen Wert begrenzt ist, der kleiner ist als die Blocklänge der Übertragungsfeder (11).

8. Druckregler nach einem der Ansprüche 1 bis 7, **dadurch gekennzeichnet,** daß
a) die Einlaßkammer (1) des Hauptventils (5, 6) einseitig durch eine jeweils eine Durchbrechung (24, 23) für die erste (26) und die zweite (25) Drosselstelle sowie eine weitere Durchbrechung (22) als Teil der Verbindungsleitung (27) aufweisende Platte (19) abgedeckt; und
b) entweder in dieser Platte (19) oder zwischen dieser und einer äußeren Abschlußplatte (28) oder in jener äußeren Abschlußplatte die Verbindungsleitung (27) gebildet ist.

9. Druckregler nach Anspruch 4 oder 5, **dadurch gekennzeichnet,** daß der ankerseitige Einlaß (30) durch eine Membran (21) gegenüber dem Gehäuse (3) abgedichtet ist.

10. Druckregler nach Anspruch 9, **dadurch gekennzeichnet,** daß die Membran (21) Teil einer zwischen der Platte (19) und dem Gehäuse (3) angeordneten, mit Ausnehmungen versehenen elastischen Dichtplatte (20) ist.

11. Druckregler nach einem der Ansprüche 2 bis 10, **dadurch gekennzeichnet,** daß als Einstellmittel für die Federbelastung des Abblasventils (34) eine Einstellschraube (38) vorgesehen ist.

12. Druckregler nach einem der Ansprüche 2 bis 10, **dadurch gekennzeichnet,** daß als Einstellmittel für die Federbelastung des Abblasventils (34) ein Magnet- oder ein Tauchspulantrieb vorgesehen ist.

## Claims

1. Servo pressure regulator comprising:
a) a main valve closure member (6) spring-biased (10) in closing direction and governing the flow channel between an inlet chamber (1) and an outlet chamber (2);
b) a solenoid operator (9, 18) comprising a control pressure chamber (18) which actuates upon the main closure member via a valve rod (8), and whereat the control pressure acts upon the main valve closure member in opening direction;
c) a solenoid (12 to 15), whose armature (14) is spring-biased and engages the main valve closure member (6) when the solenoid (12) is deenergized and which then maintains the main valve closure member in the closed position;
d) a connecting line (27) between the inlet chamber (1) and the control pressure chamber (18) of the diaphragm operator (9, 18), which connecting line (27) comprises a first throttle (26) and can be closed by the armature (14);
**characterized in that :**
e) the connecting line (27) is located stationarily; and
f) the portion ofthe connecting line (27) between inlet chamber (1) and first throttle (26) communicates with the outlet chamber (2) via a stationary connecting channel (39) having a second throttle (25).

2. Pressure regulator according to Claim 1, **characterized by**
a) a bleed valve (34) which is connected between the outlet chamber (2) and the control pressure chamber (18) and is controlled by a spring-biased diaphragm; and
b) means (37, 38) for adjusting the spring-bias of the bleed valve (34).

3. Pressure regulator according to Claim 2, **characterized in that** the connecting channel (39) is connected in parallel to a series circuit consisting of the bleed valve (34) and the first throttle (26).

4. Pressure regulator according to Claim 1, 2 or 3, **characterized in that** the inlet (30) ofthe connecting line (27), which is located close to the armature, is formed by at least one hole (30, 31) in the armature.

5. Pressure regulator according to Claim 4, **characterized in that** the armature at its front surface has a pocket hole (30) and further has at least one radial bore (31) porting into said pocket hole.

6. Pressure regulator according to one of the Claims 1 to 5, **characterized in that** the control diaphragm (9) abuts against the valve rod (8) via a transmission spring (11).

7. Pressure regulator according to Claim 6, **characterized in that** the stroke ofthe control diaphragm (9) in opening direction of the main valve (5, 6) is limited by at least one abutment (40) to a value which is smaller than the completely pressed together length of the transmission spring (11).

8. Pressure regulator according to one ofthe Claims 1 to 7, **characterized in that**:
a) the inlet chamber (1) of the main valve (5, 6) on the one side is closed by a plate (19) comprising one hole (24, 23) each for the first (26) and the second (25) throttle and further comprising another hole (22) as part of the connecting line (27); and
b) the connecting line (27) is formed either in said plate (19) or between this plate and an external closing plate (28) or is formed in said outer closing plate.

9. Pressure regulator according to Claim 4 or 5, **characterized in that** the inlet (30) at the side ofthe armature is sealed against the housing (3) by means of a diaphragm (21).

10. Pressure regulator according to Claim 9, **characterized in that** the diaphragm (21) is part of a resilient sealing plate (20) which has holes and is provided between the plate (19) and the housing (3).

11. Pressure regulator according to one ofthe Claims 2 to 10, **characterized in that** an adjusting screw (38) is provided as the adjusting means for the spring bias of the bleed valve (34).

12. Pressure regulator according to one ofthe Claims 2 to 10, **characterized in that** a solenoid or moving coil operator is provided as adjusting means for the spring bias of the bleed valve (34).

## Revendications

1. Servorégulateur de pression comportant
a) un corps de fermeture (6) d'une soupape principale, qui est chargé par un ressort (10) dans le sens de la fermeture et qui contrôle le passage entre une chambre d'admission (1) et une chambre de sortie (2);
b) un dispositif d'entraînement à membrane (9,18) qui agit, par l'intermédiaire d'une tige de soupape (8), sur le corps de fermeture de la soupape principale et comporte une chambre de pression de commande (18), la pression de commande agissant sur le corps de fermeture de la soupape principale dans le sens de l'ouverture;
c) un dispositif d'entraînement à électroaimant (12-15), dont l'armature (14) placée sous la contrainte d'un ressort (17) s'applique contre le corps de fermeture (6) de la soupape principale et le maintient dans la position fermée, dans le cas où l'électroaimant (12) n'est pas alimenté en courant;
d) une canalisation de liaison (27) qui peut être fermée par l'armature (14), possède un premier point d'étranglement (26) et est disposée entre la chambre d'admission (1) et la chambre de pression de commande (18) du dispositif d'entraînement à membrane (9,18);
caractérisé en ce que
e) la canalisation de liaison (27) est disposée de façon fixe dans le boîtier, et
f) est reliée, entre la chambre d'admission (1) et le premier point d'étranglement (26), à la chambre de sortie (2) par l'intermédiaire d'un canal de liaison (39) qui est solidaire du boîtier et possède un second point d'étranglement (25).

2. Régulateur de pression selon la revendication 1, caractérisé par :
a) une soupape d'évacuation (34) montée entre la chambre de sortie (2) et la chambre de pression de commande (18) et commandée par une membrane chargée par un ressort; ainsi que
b) un moyen (37, 38) pour régler la charge appliquée à la soupape d'évacuation (34) par le ressort.

3. Régulateur de pression selon la revendication 2, caractérisé en ce que le canal de liaison (39) est monté en parallèle avec le circuit série formé par la soupape d'évacuation (34) et le premier point d'étranglement (26).

4. Régulateur de pression selon la revendication 1, 2 ou 3, caractérisé en ce que l'entrée (30), située côté armature, de la canalisation de liaison (27) est formée par au moins un perçage (30,31) de l'armature.

5. Régulateur de pression selon la revendication 4, caractérisé en ce que l'armature possède un perçage borgne frontal (30) ainsi qu'au moins un perçage radial (31) débouchant dans ce dernier.

6. Régulateur de pression selon l'une des revendications 1 à 5, caractérisé en ce que la membrane de commande (9) prend appui sur la tige de soupape (8) par l'intermédiaire d'un ressort de transmission (11).

7. Régulateur de pression selon la revendication 6, caractérisé en ce que la course de la membrane de commande (9) dans le sens de l'ouverture de la soupape principale (5,6) est limitée, par au moins une butée (40), à une valeur qui est inférieure à la longueur d'aplatissement maximum du ressort de transmission (11).

8. Régulateur de pression selon l'une des revendications 1 à 7, caractérisé en ce que
a) la chambre d'admission (1) de la soupape principale (5, 6) est fermée, côté entrée, par une plaque (19) qui possède des passages respectifs (24,23) pour le premier point d'étranglement (26) et le second point d'étranglement (25) ainsi qu'un autre passage (22) constituant une partie de la canalisation de liaison (27); et
b) la canalisation de liaison (27) est formée, soit dans cette plaque (19), soit entre cette plaque et une plaque extérieure de fermeture (28), soit encore dans cette plaque extérieure de fermeture.

9. Régulateur de pression selon la revendication 4 ou 5, caractérisé en ce que l'entrée (30), située côté armature, est isolée de façon étanche par une membrane (21) par rapport au boîtier (3).

10. Régulateur de pression selon la revendication 9, caractérisé en ce que la membrane (21) fait partie d'une plaque élastique d'étanchéité (20), qui est disposée entre la plaque (19) et le boîtier (3) et qui comporte des évidements.

11. Régulateur de pression selon l'une des revendications 2 à 10, caractérisé en ce qu'une vis de réglage (38) est prévue en tant que moyen de réglage pour la charge appliquée à la soupape d'évacuation (34) par le ressort.

12. Régulateur de pression selon l'une des revendications 2 à 10, caractérisé en ce qu'il est prévu, comme moyen de réglage pour la charge appliquée à la soupape d'évacuation (34) par le ressort, un dispositif d'entraînement à électroaimant ou un dispositif d'entraînement à bobine mobile.
